# EUROPEAN PATENT SPECIFICATION

(11) **EP 0 717 016 B1**
(45) Date of publication and mention of the grant of the patent: **20.06.2001**
(21) Application number: 95309166.7
(22) Date of filing: 15.12.1995
(51) Int. Cl.: C04B 28/02

(54) **Concrete product**
Betonprodukt
Produit en béton

(30) Priority: 16.12.1994 GB 9425606
(43) Date of publication of application: 19.06.1996
(73) Proprietor: FORTICRETE LIMITED, Bootle Merseyside L30 4UA (GB)
(72) Inventor: Fifield, John A., Aylesbury, Buckinghamshire (GB)
(74) Representative: Caldwell, Judith Margaret

(56) References cited:
- EP-A- 0 342 609
- DE-A- 3 235 095
- FR-A- 1 526 324
- GB-A- 938 567
- US-A- 3 043 790

## Description

### BACKGROUND OF THE INVENTION

### 1. Field of the invention

The present invention relates to a process for reducing the water permeability and at the same time improving the impact resistance of concrete products, especially concrete products made from dry and semi dry mixes.

### 2. Description of the prior art

The tendency of concrete products to absorb water can be reduced by designing the mix to have a low void content generated by the aggregates used in conjunction with an optimised cement content.

It is known that the water absorption can be further reduced by including a waterproofing agent in the mix but the addition needed to give a desired reduction results in a loss of compressive and impact strength characteristics.

It is also known to use water based polymeric emulsions to improve impact resistance and water repellency characteristics of concrete products but the level of addition required to achieve the desired water repellency does not allow the production of self supporting products when they are still in the wet, uncured state. In particular it has been found extremely difficult to produce dry mix products which comply with the initial water permeability requirement specified in BS 1217:1986 "Specification for Cast Stone" which states a maximum initial water absorption at one hour of not greater than 0.10 mL/m² .s to meet Grade A.

### SUMMARY OF THE INVENTION

Accordingly, it is an object of the present invention to provide a process for the production of concrete products, especially dry and semi-dry mix concrete products, which possess good impact resistance and at the same time have a low water permeability characteristic in compliance with the initial water absorption requirement of BS 1217.

To this end, the present invention resides in a process for the production of concrete products wherein the original concrete mixture comprises a polymeric dispersion containing from 5 to 75% by weight, preferably 10 to 30% by weight, calculated relative to the dry polymer content, of at least one ester of a carboxylic acid and the mixture is a dry or semi-dry mix such that the product is self supporting in the uncured condition.

The main advantages of the process according to the invention are that the concrete products, which are self supporting in the uncured condition, when fully cured have low water absorption characteristics in compliance with the initial water absorption requirement of BS 1217 and high impact resistance.

Examples of concrete products which can be beneficially manufactured according to the process include blocks, bricks, paviours, and cast and reconstituted stone.

Moreover, the manufactured concrete products may comprise a single concrete mixture according to the invention or may comprise several concrete mixtures of which one or more may be formulated according to the invention. One example of a product which may be beneficially made from more than one concrete mixture is a block comprising a bulk backing mix formed from a lightweight concrete having good thermal properties and a facing mix which is formulated according to the invention to impart the desired impact resistance and water absorption characteristics to the product. Preferably, the facing mix is formed in situ on the backing mix.

Advantageously, the polymeric dispersion used in accordance with the invention is an aqueous dispersion. Production of such an aqueous dispersion can be effected by simple mixing means, the esters being stirred into the dispersion due to their compatibility.

The ester is preferably mixed with the polymer dispersion and the dispersion then allowed to mature before addition to the concrete mix, the length of maturation being preferably from a few seconds to about seven days, and more preferably from fifteen minutes and twenty four hours. Moreover, it is preferred to add the matured polymeric dispersion to the concrete mix at the time of mixing the concrete components.

The carboxylic acid esters contained in the polymeric dispersion according to the invention are preferably derived from carboxylic acids having from 10 to 20 carbon atoms. These carboxylic acids are preferably monocarboxylic acids and may be saturated or singly or multiply unsaturated and straight or branched chain. Lauric, stearic, oleic and linoleic acids are particularly preferred.

The carboxylic acid esters are most preferably formed by the esterification reaction between carboxylic acids and alcohols, preferably primary or secondary alcohols, but of course they could equally be prepared by reaction between alcohols and acyl halides, amides or anhydrides or any other method. The alcohols may be monohydric or polyhydric.

Preferred alcohols for use in the esterification include methyl, ethyl and propyl alcohols, especially ethylene glycol, diethylene glycol and glycerine. In the case of polyhydric alcohols, not all the hydroxy groups need be esterified. Moreover, to facilitate processing, it is also preferred to use esters which are liquids at normal room temperatures. Examples of preferred esters include ethyl oleate, glycerine monooleate, ethylene glycol monooleate, ethylene glycol dioleate, diethlyene glycol dioleate and diethylene glycol monooleate.

Preferably, the polymeric dispersions used have an average particle size of from 0.02 to 2 microns, more preferably an average particle size of from 0.05 to 1.0 microns. The polymeric dispersions preferably have a solids content of between 20 and 75%, more preferably between 40 and 60%.

The polymer used to form the polymeric dispersion may be any suitable polymer, but acrylic or methacrylic polymers, styrene polymers and vinyl polymers are preferred. Particularly preferred are acrylic homopolymers and copolymers, styrene acrylic copolymers, styrene butadiene copolymers and homopolymers, copolymers and terpolymers of vinyl acetate.

The polymer dispersion is preferably added in an amount from 0.2 to 30% by weight of cement and more preferably in an amount of from 0.5 to 10% by weight of cement.

Any combination of suitable aggregates and cement may be used for the invention to be effective. Examples of suitable aggregates are sand, limestone, marble, calcined flint, and granite. Examples of suitable cements are Ordinary Portland, Rapid Hardening Ordinary Portland, White Portland, Sulphate Resisting Portland, Portland Blastfurnace, Portland Pulverised Fuel Ash, and High Alumina.

A number of examples are now provided to illustrate the invention, all parts and percentages expressed therein are by weight. The components used to form the concrete products and the test methods employed to measure the physical properties of the products are briefly described below.

Chelford sand is a glacial deposit of high silica sand of the Pleistocene period and arising at Lower Witherington, Cheshire, England. Chelford 50 is a particular fraction with a rounded shape and an average grain size of 275 microns. Chelford 95 is another particular fraction with a sub rounded shape and an average grain size of 145 microns.

One granite found suitable arises at Mountsorrel, Leicestershire, England having an angular shape and average grain size of 340 microns.

OP cement and White cement are Ordinary Portland Cement complying with BS 12, "Specification for Portland Cement".

The method employed to determine impact resistance involved the dropping through a guide tube of a ball of known mass from progressively increasing and known heights on to the corner of the concrete product until fracture occurred. The cumulative energy of the falling ball until the point of fracture was computed and reported as the impact resistance.

The Isat water absorption method involved the placement of a standing head of water on the concrete product for a period of 60 minutes followed by the immediate measurement by means of an manometer interconnecting with the standing head of water the continuing absorption of water into the concrete product. The rate was computed and reported as initial water absorption at 60 minutes in mL/m².s.

### Example 1 (Standard)

A concrete product was manufactured in accordance with the following formulation:

| | |
|---|---|
| Chelford 50 sand | 32 parts |
| Chelford 95 sand | 16 parts |
| OP Cement | 16 parts |
| Water % | 6.5 |

The product was cured at 20°C and high humidity for 20 hours and for a further 27 days in normal air. The resulting product had the following properties:

| | |
|---|---|
| Impact resistance | 50 dJ/cm² |
| Isat 60min absorption | 1.2 mL/m².s |

### Example 1(a)

A concrete product was manufactured in accordance with the following formulation:

| | |
|---|---|
| Chelford 50 sand | 32 parts |
| Chelford 95 sand | 16 parts |
| OP Cement | 16 parts |
| 50% Styrene acrylic aqueous dispersion | 0.75 parts |
| including glycerine mono oleate | 0.02 parts |
| (Maturation time after mixing) | 12 hours |
| Water % | 6.5 |

The product was cured at 20°C and high humidity for 20 hours and for a further 27 days in normal air. The resulting product had the following properties:

| | |
|---|---|
| Impact resistance | 200 dJ/cm² |
| Isat 60min absorption | 0.12 mL/m².s |

### Example 1(b)

A concrete product was manufactured in accordance with the following formulation:

| | |
|---|---|
| Chelford 50 sand | 32 parts |
| Chelford 95 sand | 16 parts |
| OP Cement | 16 parts |
| 50% Styrene acrylic aqueous dispersion | 0.75 parts |
| including glycerine mono oleate | 0.125 parts |
| (Maturation time after mixing) | 12 hours |
| Water % | 6.5 |

The product was cured at 20°C and high humidity for 20 hours and for a further 27 days in normal air. The resulting product had the following properties:

| | |
|---|---|
| Impact resistance | 220 dJ/cm² |
| Isat 60min absorption | 0.01 mL/m².s |

### Example 1(c)

A concrete product was manufactured in accordance with the following formulation:

| | |
|---|---|
| Chelford 50 sand | 32 parts |
| Chelford 95 sand | 16 parts |
| OP Cement | 16 parts |
| 50% Styrene acrylic aqueous dispersion | 0.75 parts |
| including glycerine mono oleate | 0.25 parts |
| (Maturation time after mixing) | 12 hours |
| Water % | 6.5 |

The product was cured at 20°C and high humidity for 20 hours and for a further 27 days in normal air. The resulting product had the following properties:

| | |
|---|---|
| Impact resistance | 150 dJ/cm² |
| Isat 60min absorption | 0.01 mL/m².s |

### Example 2 (Standard)

A concrete product was manufactured in accordance with the following formulation:

| | |
|---|---|
| Chelford 50 sand | 32 parts |
| Chelford 95 sand | 16 parts |
| OP Cement | 16 parts |
| Water % | 6.5 |

The product was cured at 20°C and high humidity for 20 hours and for a further 27 days in normal air. The resulting product had the following properties:

| | |
|---|---|
| Impact resistance | 50 dJ/cm² |
| Isat 60min absorption | 1.2 mL/m².s |

### Example 2(a)

A concrete product was manufactured in accordance with the following formulation:

| | |
|---|---|
| Chelford 50 sand | 32 parts |
| Chelford 95 sand | 16 parts |
| OP Cement | 16 parts |
| 46% Styrene butadiene dispersion | 0.75 parts |
| including ethyl oleate | 0.02 parts |
| (Maturation time after mixing) | 12 hours |
| Water % | 6.5 |

The product was cured at 20°C and high humidity for 20 hours and for a further 27 days in normal air. The resulting product had the following properties:

| | |
|---|---|
| Impact resistance | 150 dJ/cm² |
| Isat 60min absorption | 0.18 mL/m².s |

### Example 2(b)

A concrete product was manufactured in accordance with the following formulation:

| | |
|---|---|
| Chelford 50 sand | 32 parts |
| Chelford 95 sand | 16 parts |
| OP Cement | 16 parts |
| 46% Styrene butadiene dispersion | 0.75 parts |
| including ethyl oleate | 0.125 parts |
| (Maturation time after mixing) | 12 hours |
| Water % | 6.5 |

The product was cured at 20°C and high humidity for 20 hours and for a further 27 days in normal air. The resulting product had the following properties:

| | |
|---|---|
| Impact resistance | 150 dJ/cm² |
| Isat 60min absorption | 0.03 mL/m².s |

### Example 2(c)

A concrete product was manufactured in accordance with the following formulation:

| | |
|---|---|
| Chelford 50 sand | 32 parts |
| Chelford 95 sand | 16 parts |
| OP Cement | 16 parts |
| 46% Styrene butadiene dispersion | 0.75 parts |
| including ethyl oleate | 0.25 parts |
| (Maturation time after mixing) | 12 hours |
| Water % | 6.5 |

The product was cured at 20°C and high humidity for 20 hours and for a further 27 days in normal air. The resulting product had the following properties:

| | |
|---|---|
| Impact resistance | 110 dJ/cm² |
| Isat 60min absorption | 0.02 mL/m².s |

### Example 3 (Standard)

A concrete product was manufactured in accordance with the following formulation:

| | |
|---|---|
| Mountsorrel granite | 32 parts |
| Chelford 95 sand | 16 parts |
| White Cement | 16 parts |
| Water % | 6.5 |

The product was cured at 20°C and high humidity for 20 hours and for a further 27 days in normal air. The resulting product had the following properties:

| | |
|---|---|
| Impact resistance | 40 dJ/cm² |
| Isat 60min absorption | 1.3 mL/m².s |

### Example 3(a)

A concrete product was manufactured in accordance with the following formulation:

| | |
|---|---|
| Mountsorrel granite | 32 parts |
| Chelford 95 sand | 16 parts |
| White Cement | 16 parts |
| 48% Acrylic aqueous dispersion | 0.75 parts |
| including diethylene glycol monooleate | 0.02 parts |
| (Maturation time after mixing) | 5 hours |
| Water % | 6.5 |

The product was cured at 20°C and high humidity for 20 hours and for a further 27 days in normal air. The resulting product had the following properties:

| | |
|---|---|
| Impact resistance | 190 dJ/cm² |
| Isat 60min absorption | 0.15 mL/m².s |

### Example 3(b)

A concrete product was manufactured in accordance with the following formulation:

| | |
|---|---|
| Mountsorrel granite | 32 parts |
| Chelford 95 sand | 16 parts |
| White Cement | 16 parts |
| 48% Acrylic aqueous dispersion | 0.75 parts |
| including diethylene glycol monooleate | 0.125 parts |
| (Maturation time after mixing) | 5 hours |
| Water % | 6.5 |

The product was cured at 20°C and high humidity for 20 hours and for a further 27 days in normal air. The resulting product had the following properties:

| | |
|---|---|
| Impact resistance | 210 dJ/cm² |
| Isat 60min absorption | 0.02 mL/m².s |

### Example 3(c)

A concrete product was manufactured in accordance with the following formulation:

| | |
|---|---|
| Mountsorrel granite | 32 parts |
| Chelford 95 sand | 16 parts |
| White Cement | 16 parts |
| 48% Acrylic aqueous dispersion | 0.75 parts |
| including diethylene glycol monooleate | 0.25 parts |
| (Maturation time after mixing) | 5 hours |
| Water % | 6.5 |

The product was cured at 20°C and high humidity for 20 hours and for a further 27 days in normal air. Products were tested with the following results:

| | |
|---|---|
| Impact resistance | 170 dJ/cm² |
| Isat 60min absorption | 0.01 mL/m².s |

The following test series illustrate the effect of maturation of the polymer dispersion containing an ester according to the invention.

### Example 4

A concrete product was manufactured in accordance with the following formulation:

| | |
|---|---|
| Chelford 50 sand | 32 parts |
| Chelford 95 sand | 16 parts |
| OP Cement | 16 parts |
| Water % | 6.5 |
| 50% Styrene acrylic aqueous dispersion | 0.75 parts |
| including glycerine mono oleate | 0.125 parts |

Maturation times after mixing according to table of results.

The product was cured at 20°C and high humidity for 20 hours and for a further 27 days in normal air. Products were tested with the following results:

| Maturity of the polymer dispersion before use | Impact Resistance dJ/cm³ | 7 day Isat initial water absorption mL/m².s |
|---|---|---|
| 30 seconds | 230 | 0.09 |
| 5 minutes | 550 | 0.04 |
| 15 minutes | 220 | 0.01 |
| 1 hours | 220 | 0.01 |
| 5 hours | 220 | 0.01 |
| 12 hours | 220 | 0.01 |
| 24 hours | 220 | 0.01 |
| 7 days | 210 | 0.02 |
| 28 days | 190 | 0.08 |

While particular embodiments have been described, it should be appreciated that various modifications may be made without departing from the scope of the invention.

## Claims

1. A process for the manufacture of a concrete product from a concrete mixture, wherein said concrete mixture comprises a polymeric dispersion containing from 5 to 75% by weight, based on the dry polymer content, of at least one carboxylic acid ester and the mixture is a dry or semi-dry mix such that the product is self supporting in the uncured condition.

2. A process according to claim 1, wherein said polymeric dispersion is an aqueous dispersion.

3. A process according to any preceding claim, wherein said carboxylic acid ester is derived from a monocarboxylic acid.

4. A process according to any preceding claim, wherein said carboxylic acid ester is derived from a carboxylic acid containing from about 10 to about 20 carbon atoms.

5. A process according to claim 3 or 4, wherein said carboxylic acid is selected from lauric, stearic, oleic and linoleic acid.

6. A process according to any preceding claim, wherein said carboxylic acid ester is derived from a methyl, ethyl or propyl alcohol.

7. A process according to claim 6, wherein said carboxylic acid ester is derived from ethylene glycol, diethylene glycol or glycerine.

8. A process according to any preceding claim, wherein said carboxylic acid ester comprises ethyl oleate, ethylene glycol monooleate, ethylene glycol dioleate, diethylene glycol monooleate, diethylene glycol dioleate or glycerine monooleate.

9. A process as claimed in any preceding claim wherein said polymeric dispersion contains from 10 to 30% by weight of said ester, calculated relative to the dry polymer content.

10. A process as claimed in any preceding claim, wherein said polymeric dispersion is comprised of particles having an average particle size of from 0.02 to 2 microns.

11. A process as claimed in claim 10, wherein the particles in said polymeric dispersion have an average particle size of from 0.05 to 1.0 microns.

12. A process as claimed in any preceding claim, wherein said polymeric dispersion has a solids content of from about 20 to 75%.

13. A process as claimed in claim 12, wherein said polymeric dispersion has a solids content of from about 40 to 60%.

14. A process as claimed in any preceding claim, wherein said polymeric dispersion comprises an acrylic or methacrylic polymer, a styrene polymer, a butadiene polymer or a vinyl polymer.

15. A process according to claim 14, wherein said polymeric dispersion comprises an acrylic homopolymer or copolymer.

16. A process according to claim 15, wherein said polymeric dispersion comprises a styrene acrylic copolymer.

17. A process according to claim 14, wherein said polymeric dispersion comprises a styrene butadiene copolymer.

18. A process according to claim 14, wherein said polymeric dispersion comprises a homopolymer, copolymer or terpolymer of vinyl acetate.

19. A process as claimed in any preceding claim, wherein said polymeric dispersion is added in an amount of from 0.2 to 30% by weight of cement.

20. A process as claimed in claim 19, wherein said polymeric dispersion is added in an amount of from 0.5 to 10% by weight of cement.

21. A process as claimed in any preceding claim, wherein said polymer dispersion containing an ester has been allowed to maturate for a period of from about 15 minutes to about 24 hours.

## Patentansprüche

1. Verfahren zur Herstellung eines Betonproduktes aus einem Betongemisch, wobei das Betongemisch eine Polymerdispersion umfaßt, die , bezogen auf den Polymertrockengehalt, 5 - 75 Gew.-% mindestens eines Carbonsäureesters enthält und wobei das Gemisch ein trockenes oder halbtrockenes Gemisch ist, so daß das Produkt im unausgehärteten Zustand freitragend ist.

2. Verfahren nach Anspruch 1, wobei die Polymerdispersion eine wässrige Dispersion ist.

3. Verfahren nach einem der vorhergehenden Ansprüche, wobei der Carbonsäureester von einer Monocarbonsäure abgeleitet ist.

4. Verfahren nach einem der vorhergehenden Ansprüche, wobei der Carbonsäureester von einer Carbonsäure abgeleitet ist, die etwa 10 bis etwa 20 Kohlen-stoffatome enthält.

5. Verfahren nach Anspruch 3 oder 4, wobei die Carbonsäure ausgewählt ist aus Laurinsäure, Stearinsäure, Oleinsäure und Linolsäure.

6. Verfahren nach einem der vorhergehenden Ansprüche, wobei der Carbonsäureester von einem Methyl-, Ethyl- oder Propylalkohol abgeleitet ist.

7. Verfahren nach Anspruch 6, wobei der Carbonsäureester von Ethylenglycol, Diethylenglycol oder Glycerin abgeleitet ist.

8. Verfahren nach einem der vorhergehenden Ansprüche, wobei der Carbonsäureester Ethyloleat, Ethylenglycolmonooleat, Ethylenglycoldioleat, Diethylenglycolmonooleat, Diethylenglycoldioleat oder Glycerinmonooleat umfaßt.

9. Verfahren nach einem der vorhergehenden Ansprüche, wobei die Polymerdispersion 10 bis 30 Gew.-% des Esters enthält, berechnet bezogen auf den Polymertrockengehalt.

10. Verfahren nach einem der vorhergehenden Ansprüche, wobei die Polymerdispersion aus Partikeln zusammengesetzt ist, die eine durchschnittliche Partikelgröße von 0,02 bis 2 Micron aufweisen.

11. Verfahren nach Anspruch 10, wobei die Partikel in der Polymerdispersion eine durchschnittliche Partikelgröße von 0,05 bis 1,0 Micron aufweisen.

12. Verfahren nach einem der vorhergehenden Ansprüche, wobei die Polymerdispersion einen Feststoffgehalt von etwa 20 bis 75 % aufweist.

13. Verfahren nach Anspruch 12, wobei die Polymerdispersion einen Feststoffgehalt von etwa 40 bis 60 % aufweist.

14. Verfahren nach einem der vorhergehenden Ansprüche, wobei die Polymerdispersion ein Acryl- oder Methacrylpolymer, ein Styrolpolymer, ein Butadienpolymer oder ein Vinylpolymer umfaßt.

15. Verfahren nach Anspruch 14, wobei die Polymerdispersion ein Acrylhomopolymer oder -Copolymer umfaßt.

16. Verfahren nach Anspruch 15, wobei die Polymerdispersion ein Styrolacrylcopolymer umfaßt.

17. Verfahren nach Anspruch 14, wobei die Polymerdispersion ein Styrolbutadiencopolymer umfaßt.

18. Verfahren nach Anspruch 14, wobei die Polymerdispersion ein Homopolymer, Copolymer oder Terpolymer von Vinylacetat umfaßt.

19. Verfahren nach einem der vorhergehenden Ansprüche, wobei die Polymerdispersion in einer Menge von 0,2 bis 30 Gew.-% Zement zugegeben wird.

20. Verfahren nach Anspruch 19, wobei die Polymerdispersion in einer Menge von 0,5 bis 10 Gew.-% Zement zugegeben wird.

21. Verfahren nach einem der vorhergehenden Ansprüche, wobei man die Polymerdispersion, die einen Ester enthält, für einen Zeitraum von etwa 15 Minuten bis etwa 24 Stunden altern läßt.

## Revendications

1. Procédé de fabrication d'un produit en béton à partir d'un mélange de béton, dans lequel ledit mélange de béton comporte une dispersion polymérique contenant de 5 à 75 % en poids, sur la base de la teneur en polymère sec, d'au moins un ester d'acide carboxylique et le mélange est un mélange sec ou semi-sec de sorte que le produit est auto-portant dans la condition non-cuite.

2. Procédé selon la revendication 1, dans lequel ladite dispersion polymérique est une dispersion aqueuse.

3. Procédé selon l'une quelconque des revendications précédentes, dans lequel ledit ester d'acide carboxylique est dérivé d'un acide monocarboxylique.

4. Procédé selon l'une quelconque des revendications précédentes, dans lequel ledit ester d'acide carboxylique est dérivé d'un acide carboxylique contenant d'environ 10 à environ 20 atomes de carbone.

5. Procédé selon la revendication 3 ou 4, dans lequel ledit acide carboxylique est sélectionné parmi l'acide laurique, stéarique, oléique et linoléique.

6. Procédé selon l'une quelconque des revendications précédentes, dans lequel ledit ester d'acide carboxylique est dérivé d'un alcool méthylique, éthylique ou propylique.

7. Procédé selon la revendication 6, dans lequel ledit ester d'acide carboxylique est dérivé d'éthylèneglycol, de diéthylèneglycol, ou de glycérine.

8. Procédé selon l'une quelconque des revendications précédentes, dans lequel ledit ester d'acide carboxylique comporte de l'oléate d'éthyle, du monooléate d'éthylèneglycol, du dioléate d'éthylèneglycol, du monooléate de diéthylèneglycol, du dioléate de diéthylèneglycol ou du monooléate de glycérine.

9. Procédé selon l'une quelconque des revendications précédentes, dans lequel ladite dispersion polymérique contient de 10 à 30 % en poids dudit ester, calculé par rapport à la teneur en polymère sec.

10. Procédé selon l'une quelconque des revendications précédentes, dans lequel ladite dispersion polymérique est constituée de particules ayant une dimension moyenne de particules allant de 0,02 à 2 microns.

11. Procédé selon la revendication 10, dans lequel les particules de ladite dispersion polymérique ont une dimension moyenne de particules allant de 0,05 à 1,0 micron.

12. Procédé selon l'une quelconque des revendications précédentes, dans lequel ladite dispersion polymérique a une teneur en matières solides allant d'environ 20 à 75 %.

13. Procédé selon la revendication 12, dans lequel ladite dispersion polymérique a une teneur en matières solides allant d'environ 40 à 60 %.

14. Procédé selon l'une quelconque des revendications précédentes, dans lequel ladite dispersion polymérique comporte un polymère acrylique ou méthacrylique, un polymère de styrène, un polymère de butadiène ou un polymère vinylique.

15. Procédé selon la revendication 14, dans lequel ladite dispersion polymérique comporte un homopolymère ou copolymère acrylique.

16. Procédé selon la revendication 15, dans lequel ladite dispersion polymérique comporte un copolymère acrylique de styrène.

17. Procédé selon la revendication 14, dans lequel ladite dispersion polymérique comporte un copolymère de styrène-butadiène.

18. Procédé selon la revendication 14, dans lequel ladite dispersion polymérique comporte un homopolymère, un copolymère ou un terpolymère d'acétate de vinyle.

19. Procédé selon l'une quelconque des revendications précédentes, dans lequel ladite dispersion polymérique est ajoutée selon une quantité allant de 0,2 à 30 % en poids de ciment.

20. Procédé selon la revendication 19, dans lequel ladite dispersion polymérique est ajoutée selon une quantité allant de 0,5 à 10 % en poids de ciment.

21. Procédé selon l'une quelconque des revendications précédentes, dans lequel on a laissé mûrir ladite dispersion polymérique contenant un ester pendant une période allant d'environ 15 minutes à environ 24 heures.
